(19) Europäisches Patentamt
European Patent Office
Office européen des brevets

(11) EP 2 199 356 A1

(12) EUROPEAN PATENT APPLICATION
published in accordance with Art. 153(4) EPC

(43) Date of publication:
23.06.2010 Bulletin 2010/25

(51) Int Cl.:
$C09J\ 7/02^{(2006.01)}$    $C09J\ 201/00^{(2006.01)}$

(21) Application number: 08837178.6

(22) Date of filing: 10.10.2008

(86) International application number:
PCT/JP2008/068917

(87) International publication number:
WO 2009/048176 (16.04.2009 Gazette 2009/16)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 12.10.2007 JP 2007266615

(71) Applicant: Lintec Corporation
Itabashi-ku
Tokyo 173-0001 (JP)

(72) Inventor: KATO, Kiichiro
Tokyo 173-0001 (JP)

(74) Representative: Gille Hrabal Struck Neidlein Prop
Roos
Patentanwälte
Brucknerstrasse 20
40593 Düsseldorf (DE)

(54) **PRESSURE-SENSITIVE ADHESIVE SHEET AND PROCESS FOR PRODUCING THE SAME**

(57)    A pressure sensitive adhesive sheet which comprises a substrate sheet (1) and a pressure sensitive adhesive layer (2) disposed at least on one face of the substrate sheet, wherein the pressure sensitive adhesive layer (2) has a structure such that (a) on a surface of the substrate sheet (1) directly or on a pressure sensitive adhesive base layer (2a) having a prescribed thickness which is formed on a surface of the substrate sheet, a plurality of stripe-shaped protrusions (2b) are formed in parallel at a prescribed distance continuously from one end portion to the other end portion of the substrate sheet (1), and (b) a plurality of independent discontinuous protrusions (2c, 2c-1, 2c-2, 2c-3) are disposed in the form of islands between adjacent stripe-shaped protrusions (2b). The pressure sensitive adhesive sheet enables to easily remove the trapped air formed during application of the sheet and exhibits excellent appearance and adhesive strength.

Fig. 4

**Description**

TECHNICAL FIELD

The present invention relates to a pressure sensitive adhesive sheet and a process for producing the sheet. More particularly, the present invention relates to a pressure sensitive adhesive sheet which enables to easily remove the trapped air formed during application of the sheet and exhibits excellent appearance and adhesive strength and a process for producing the sheet.

BACKGROUND ART

Heretofore, pressure sensitive adhesive sheets are, in general, constituted with a substrate sheet, a pressure sensitive adhesive layer formed on the surface of the substrate sheet and a release sheet disposed on the adhesive layer. When the pressure sensitive adhesive sheet is used, the release sheet is removed, and the pressure sensitive adhesive sheet is attached to an adherend in a manner such that the pressure sensitive adhesive layer is brought into contact with the adherend.
However, when the area of the pressure sensitive adhesive sheet is large to some degree, the trapped air tends to remain between the pressure sensitive adhesive layer and the adherend. This causes a problem in that the portion of the trapped air forms so called "swell" which is a portion protruded at the front face of the attached pressure sensitive adhesive sheet, and it is difficult that the pressure sensitive adhesive sheet is applied to exhibit excellent appearance. Complicated processes have been conducted to overcome the problem. For example, the attached sheet is peeled off and attached again or, when the sheet is attached to an adherend such as glass, the face of the adherend is wetted with an aqueous solution containing a surfactant and the pressure sensitive adhesive sheet is dried after being attached.
Further to overcome the above problem, for example, a sheet for whiteboards which comprises a substrate exhibiting flexibility, a layer for writing formed on one face of the substrate and a pressure sensitive adhesive layer formed on the other face of the substrate, wherein the pressure sensitive adhesive layer has many small portions or ridges protruded from the surface of the layer, is disclosed (for example, refer to Patent Reference 1).
When the pressure sensitive adhesive layer described above is used, the pressure sensitive adhesive sheet can be easily attached to other articles even when the sheet has a large size. Even when the air is trapped between the adherend and the pressure sensitive adhesive layer or a gas is generated from the adherend during the application, the gas is discharged through gaps between the pressure sensitive adhesive layer and the adherend at portions of the adhesive layer other than the small protruded portions, and the so-called "swell" is not formed. However, in the case of marking sheets, a drawback arises in that, since a flexible material is used for the substrate, unevenness appears on the surface of the substrate sheet due to the uneven surface of the pressure sensitive adhesive layer when the pressure sensitive adhesive layer described above is used, and the appearance becomes poor.
A pressure sensitive adhesive sheet, in which a pressure sensitive adhesive layer is disposed on a substrate sheet, the pressure sensitive adhesive layer has many portions protruded from the surface to the outside, and many protruded portions having different heights are mixed, is disclosed (for example, refer to Patent Reference 2)
In this pressure sensitive adhesive sheet, discharge of the trapped air can be easily achieved due to the unevenness of the surface of the pressure sensitive adhesive formed with the protruded portions. Temporary positioning of the sheet can be conducted by pressing under a small pressure since the pressure sensitive adhesive sheet is brought into contact with the adherend mainly at top portions of protrusions having large heights. Sufficiently strong adhesion can be achieved by pressing more strongly since various portions of the pressure sensitive adhesive layer including protrusions having small heights are brought into contact with the adherend, and sufficiently large portions including protruded portions having small heights are adhered with the adherend. However, this pressure sensitive adhesive sheet has a drawback in that, since the heights of the protruded portions are irregular, unevenness appears on the surface of the substrate sheet, and the appearance becomes poor.

[Patent Reference 1] Japanese Patent Application Laid-Open No. Heisei 10(1998)-138691
[Patent Reference 2] Japanese Patent Application Laid-Open No. 2004-115766

DISCLOSURE OF THE INVENTION

[Problems to be Overcome by the Invention]

Under the above circumstances, the present invention has an object of providing a pressure sensitive adhesive sheet which enables to easily remove the trapped air formed during application of the sheet and exhibits excellent appearance and adhesive strength.

[Means for Overcoming the Problems]

As the result of intensive studies by the present inventors to develop the pressure sensitive adhesive sheet exhibiting the advantageous properties described above, it was found that the object could be achieved by disposing a plurality of stripe-shaped protrusions on the surface of the pressure sensitive adhesive layer and a plurality of independent discontinuous protrusions between adjacent stripe-shaped protrusions in the form of islands. The present invention has been completed based on the knowledge.

The present invention provides:

[1] A pressure sensitive adhesive sheet which comprises a substrate sheet and a pressure sensitive adhesive layer disposed at least on one face of the substrate sheet, wherein the pressure sensitive adhesive layer has a structure such that:

(a) on a surface of the substrate sheet directly or on a pressure sensitive adhesive base layer having a prescribed thickness which is formed on a surface of the substrate sheet, a plurality of stripe-shaped protrusions are disposed in parallel at a prescribed distance continuously from one end portion to an other end portion of the substrate sheet, and

(b) a plurality of independent discontinuous protrusions are disposed in a form of islands between adjacent stripe-shaped protrusions; [2] The pressure sensitive adhesive sheet described in [1], wherein the plurality of independent discontinuous protrusions in a form of islands are disposed between adjacent stripe-shaped protrusions regularly in a manner such that a repeating pattern is formed with groups of a prescribed number of the protrusions;

[3] The pressure sensitive adhesive sheet described in any one of [1] and [2], wherein a thickness of the pressure sensitive adhesive base layer is 1 to 60 $\mu$m;

[4] The pressure sensitive adhesive sheet described in any one of [1] to [3], wherein portions of the plurality of stripe-shaped protrusions contacting an adherend have a width of 100 to 3,000 $\mu$m and a height of 2 to 40 $\mu$m;

[5] The pressure sensitive adhesive sheet described in any one of [1] to [4], wherein a distance between portions of adjacent stripe-shaped protrusions contacting an adherend is 115 to 3,000 $\mu$m;

[6] The pressure sensitive adhesive sheet described in any one of [1] to [5], wherein a height of the plurality of independent discontinuous protrusions disposed in a form of islands between adjacent stripe-shaped protrusions is 2 to 60 $\mu$m, and a difference of the height from a height of the stripe-shaped protrusion is 0 to 35 $\mu$m;

[7] The pressure sensitive adhesive sheet described in any one of [2] to [6], wherein the plurality of independent discontinuous protrusions disposed in a form of islands are disposed regularly in a manner such that a repeating pattern is formed with groups of three protrusions;

[8] The pressure sensitive adhesive sheet described in [7], wherein the plurality of independent discontinuous protrusions disposed in a form of islands are disposed in a manner such that: two protrusions having a same shape of a rectangular parallelepiped or a frustum of a quadrangular pyramid are disposed in parallel with the stripe-shaped protrusions and at parallel positions at a prescribed distance from each other; a single protrusion having a shape of a rectangular parallelepiped or a frustum of a quadrangular pyramid is disposed at a position such that a central line of the single protrusion is placed at a position of a central line of a gap between the two protrusions having a same shape of a rectangular parallelepiped or a frustum of a quadrangular pyramid, and the single protrusion is placed at prescribed distances from the two protrusions having a shape of a rectangular parallelepiped or a frustum of a quadrangular pyramid; and groups of three protrusions comprising said two protrusions and said single protrusion are disposed regularly in a manner such that a repeating pattern is formed with the groups of three protrusions; and

[9] A process for producing a pressure sensitive adhesive sheet described in any one of [1] to [8], which comprises, using a release sheet having a layer treated for releasing which has a face of shape transfer on a surface, forming a pressure sensitive adhesive layer on the layer treated for releasing and laminating a substrate sheet with the pressure sensitive adhesive layer.

THE EFFECT OF THE INVENTION

In accordance with the present invention, the pressure sensitive adhesive sheet which enables to easily remove the trapped air formed during application of the sheet and exhibits excellent appearance and adhesive strength can be provided.

BRIEF DESCRIPTION OF THE DRAWINGS

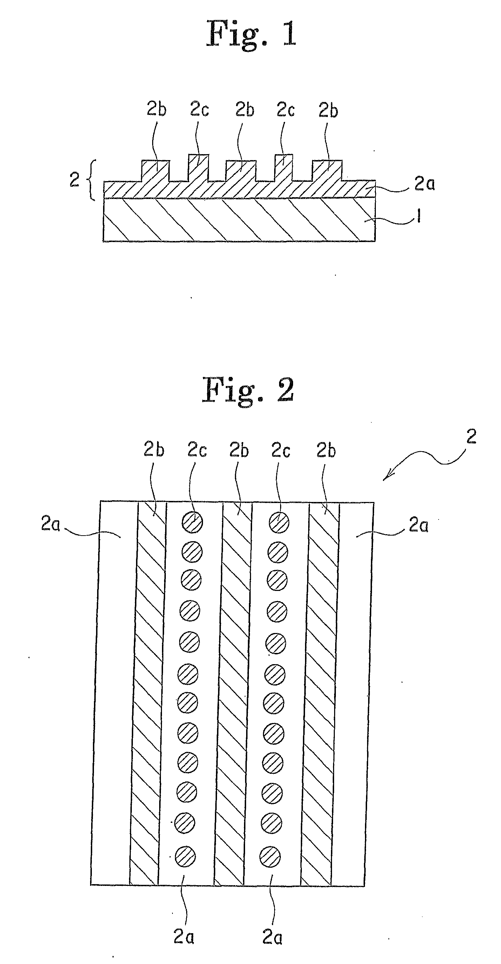

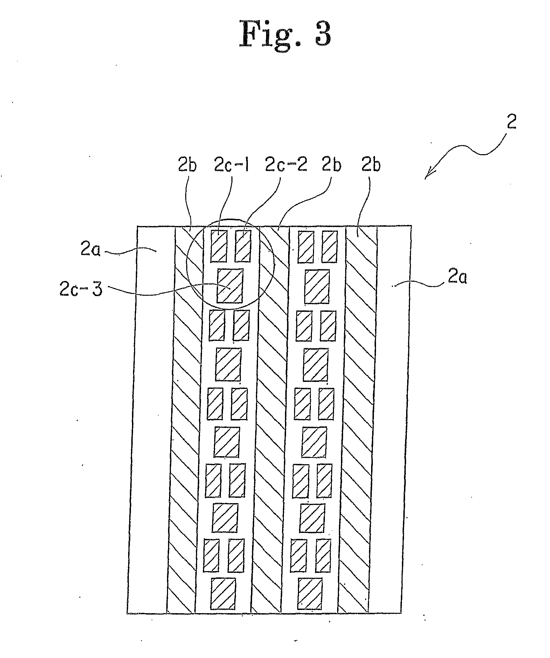

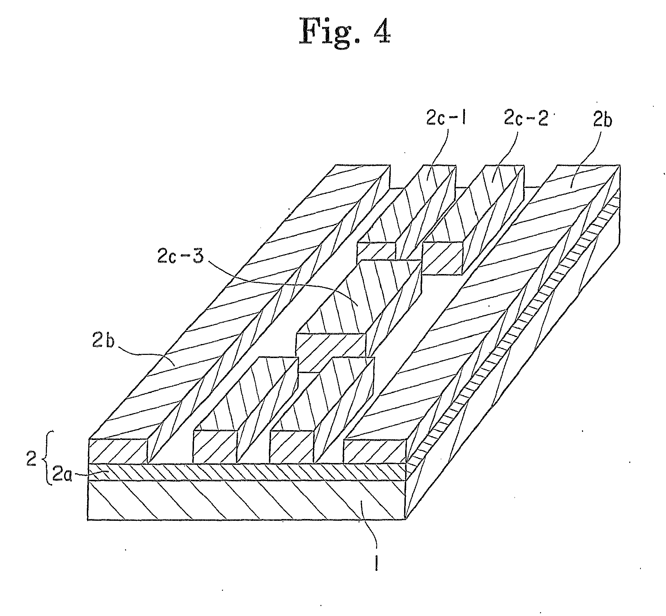

Figure 1 shows a schematic sectional view exhibiting the shape of an embodiment of the pressure sensitive adhesive layer in the pressure sensitive adhesive sheet of the present invention. Figure 2 shows a schematic plan view exhibiting the shape of the pressure sensitive adhesive layer corresponding to the pressure sensitive adhesive layer shown in Figure 1. Figure 3 shows a schematic plan view exhibiting a preferable embodiment of the pressure sensitive adhesive layer in the pressure sensitive adhesive sheet of the present invention. Figure 4 shows a partial schematic perspective view exhibiting the shape of the pressure sensitive adhesive layer corresponding to the pressure sensitive adhesive layer shown in Figure 3.

In the Figures, reference numerals mean as follows: 1: a substrate sheet; 2: a pressure sensitive adhesive layer; 2a: a pressure sensitive adhesive base layer; 2b: a stripe-shaped protrusion; and 2c, 2c-1, 2c-2 ad 2c-3: independent discontinuous protrusions in the form of islands.

THE MOST PREFERRED EMBODIMENT TO CARRY OUT THE INVENTION

The pressure sensitive adhesive sheet of the present invention comprises a substrate sheet and a pressure sensitive adhesive layer disposed on the front face and/or the back face of the substrate sheet, and protrusions having a specific shape are formed on the pressure sensitive adhesive layer.

[Pressure sensitive adhesive layer]

(Shape)

The pressure sensitive adhesive layer has a structure such that: (a) on the surface of the substrate sheet directly or on a pressure sensitive adhesive base layer having a prescribed thickness which is formed on the surface of the substrate sheet, a plurality of stripe-shaped protrusions are disposed in parallel at a prescribed distance from each other continuously from one end portion to the other end portion of the substrate sheet, and (b) a plurality of independent discontinuous protrusions are disposed in the form of islands between adjacent stripe-shaped protrusions.
Figures 1 and 2 show the schematic sectional view and the schematic plan view, respectively, exhibiting the shape of an embodiment of the pressure sensitive adhesive layer described above. A pressure sensitive adhesive layer 2 is formed on the surface of a substrate sheet 1. In the pressure sensitive adhesive layer 2, a plurality of stripe-shaped protrusions 2b are formed on a pressure sensitive adhesive base layer 2a, which is formed where necessary, in parallel continuously from one end portion to the other end portion of the substrate sheet, and a plurality of independent discontinuous protrusions 2c are disposed in the form of islands between adjacent stripe-shaped protrusions 2b.
In the pressure sensitive adhesive sheet of the present invention, it is preferable that the thickness of the pressure sensitive adhesive base layer 2a, which is formed on the surface of the substrate sheet where necessary, is 70 $\mu$m or smaller and more preferably 1 to 60 $\mu$m so that squeezing out of the pressure sensitive adhesive from the edge portion is prevented.
In the plurality of stripe-shaped protrusion 2b which are formed on the surface of the substrate sheet 1 directly or on the pressure sensitive adhesive base layer 2a, it is preferable that the top surface of the protrusion is flat from the standpoint of the pressure sensitive adhesive property of the pressure sensitive adhesive sheet with the adherend. Therefore, it is preferable that the stripe-shaped protrusion is a protrusion having a rectangular sectional shape in the vertical direction (a rectangular parallelepiped) or a protrusion having a trapezoidal sectional shape in the vertical direction (a frustum of a quadrangular pyramid).
When the protrusion has a shape having edge portions such as a rectangular parallelepiped, the edge portions are inevitably rounded during formation of the pressure sensitive adhesive layer, occasionally. In the present invention, the shape in the descriptions on the shape of the stripe-shaped protrusion and the independent discontinuous protrusion includes the rounded shapes described above.
In Figures 1 and 2, the stripe-shaped protrusions has a shape of a rectangular parallelepiped.
In the present invention, it is preferable that the width of the portion of the stripe-shaped protrusion contacting the adherend is about 100 to 3,000 $\mu$m and more preferably 125 to 2,000 $\mu$m from the standpoint of the property of removing the trapped air, the adhesive property and the appearance. It is preferable that the height from the surface of the substrate sheet or the surface of the pressure sensitive adhesive base layer is 2 to 40 $\mu$m and more preferably 5 to 35 $\mu$m.
It is preferable that the distance between portions of adjacent stripe-shaped protrusions contacting the adherend is 115 to 3,000 $\mu$m and more preferably 125 to 2,000 $\mu$m from the standpoint of the appearance of the surface of the substrate sheet.

It is preferable that the plurality of stripe-shaped protrusions are formed in the direction parallel with the direction of application of the pressure sensitive adhesive in the coating process from the standpoint of the property for application of the pressure sensitive adhesive.

The pressure sensitive adhesive sheet of the present invention is **characterized in that** a plurality of stripe-shaped protrusions described above are formed in parallel at a prescribed distance from each other, and a plurality of independent discontinuous protrusions are disposed in the form of islands between adjacent stripe-shaped protrusions. Since a plurality of independent discontinuous protrusions are disposed in the form of islands between adjacent stripe-shaped protrusions, the excellent property for removing the trapped air can be maintained, and the adhesive property with the adherend and the appearance are excellent.

In the present invention, it is preferable that the plurality of independent discontinuous protrusions disposed in the form of islands between adjacent stripe-shaped protrusions are disposed regularly in a manner such that a repeating pattern is formed with groups of a prescribed number, which is preferably 1 to 5, of the protrusions from the standpoint of the property for removing the trapped air, the adhesive property, the appearance and the property for formation.

The shape of the independent discontinuous protrusions disposed in the form of islands is not particularly limited, and protrusions having various shapes can be used. Specific examples include protrusions having a sectional shape in the vertical direction of a polygon such as a triangle, a quadrangle (a rectangle) and a trapezoid, an inverse U-shape and a hemisphere and protrusions having shapes of cylinders, prisms such as trigonal prisms and tetragonal prisms, circular cones and pyramids such as trigonal pyramids and tetragonal pyramids. Among these shapes, frustums of quadrangular pyramids having trapezoidal sectional shapes in the vertical direction are preferable. In an embodiment shown in Figures 1 and 2, the plurality of independent discontinuous protrusions disposed in the form of islands 2c have a cylindrical shape and are disposed regularly in a manner such that a repeating pattern is formed with a single protrusion.

In the pressure sensitive adhesive sheet of the present invention, it is preferable that the plurality of independent discontinuous protrusions in the form of islands disposed between adjacent stripe-shaped protrusions regularly in a manner such that a repeating pattern is formed with groups of a prescribed number of the protrusions have a height of 2 to 60 $\mu$m and more preferably 5 to 50 $\mu$m from the surface of the substrate sheet or the surface of the pressure sensitive adhesive base layer. When the height is smaller than 2 $\mu$m, it is difficult that the sufficient property for removing the trapped air is exhibited. When the height exceeds 60 $\mu$m, it is difficult that the shape of the protrusions is maintained. Therefore, a height outside of the above range is not preferable.

It is preferable that the difference of the height of the independent discontinuous protrusion from the height of the stripe-shaped protrusion described above (the height of the former - the height of the latter) iso -10 to 50 $\mu$m. When the difference is smaller than -10 $\mu$m, depressions are formed on the surface of the substrate sheet, and the appearance becomes poor. When the difference exceeds 50 $\mu$m, protrusions are formed on the surface of the substrate sheet, and the appearance becomes poor. Therefore, a difference outside of the above range is not preferable. It is more preferable that the difference is 0 to 35 $\mu$m. To improve the property for application, for example, to make it possible to conduct the repositioning after temporary attachment, it is preferable that the height of the independent discontinuous protrusion is larger than the height of the stripe-shaped protrusion, and it is more preferable that the difference in the height is 2 to 35 $\mu$m.

In the pressure sensitive adhesive sheet of the present invention, it is preferable that the plurality of independent discontinuous protrusions disposed in the form of islands are disposed regularly in a manner such that a repeating pattern is formed with groups of three protrusions from the standpoint of the balance among the property for removing the trapped air, the appearance and the area of adhesion.

Specifically, it is preferable that the plurality of independent discontinuous protrusions disposed in the form of islands are disposed in a manner such that: two protrusions having the same shape of a rectangular parallelepiped or a frustum of a quadrangular pyramid are disposed in parallel with the stripe-shaped protrusions and at parallel positions at a prescribed distance from each other; a single protrusion having the shape of a rectangular parallelepiped or a frustum of a quadrangular pyramid is disposed at a position such that the central line of the single protrusion is placed at the position of the central line of the gap between the two protrusions having the same shape of a rectangular parallelepiped or a frustum of a quadrangular pyramid, and the single protrusion is placed at prescribed distances from the two protrusions having the shape of a rectangular parallelepiped or a frustum of a quadrangular pyramid; and groups of three protrusions comprising said two protrusions and said single protrusion are disposed regularly in a manner such that a repeating pattern is formed with the groups of three protrusions.

Figure 3 shows a schematic plan view exhibiting a preferable embodiment of the shape of the pressure sensitive adhesive layer described above. Figure 4 shows a partial schematic perspective view exhibiting the shape of the pressure sensitive adhesive layer corresponding to the pressure sensitive adhesive layer shown in Figure 3. It is shown in the figures that a pressure sensitive adhesive layer 2 is formed on the surface of a substrate sheet 1, a plurality of stripe-shaped protrusions 2b are formed on the pressure sensitive adhesive base layer 2a, which is formed on the pressure sensitive adhesive layer 2 where necessary, in parallel from one end portion to the other end portion of the substrate sheet 1, and a plurality of independent discontinuous protrusions are disposed in the form of islands between the adjacent stripe-shaped protrusions 2b.

It is shown in Figures 3 and 4 that, the plurality of independent discontinuous protrusions disposed in the form of islands are disposed in a manner such that: two protrusions 2c-1 and 2c-2 having the same shape of a rectangular parallelepiped are disposed in parallel with the stripe-shaped protrusions 2b and at parallel positions at a prescribed distance from each other; a single protrusion 2c-3 having the shape of a rectangular parallelepiped is disposed at a position such that the central line of the single protrusion is placed at the position of the central line of the gap between the two protrusions 2c-1 and 2c-2 having the same shape of a rectangular parallelepiped, and the single protrusion 2c-3 is placed at prescribed distances from the two protrusions 2c-1 and 2c-2 having the same shape of a rectangular parallelepiped; and groups of three protrusions comprising the two protrusions and the single protrusion described above are disposed regularly in a manner such that a repeating pattern is formed with the groups of three protrusions (as shown in the circle).

When the plurality of independent discontinuous protrusions disposed between the stripe-shaped protrusions 2b in the form of islands described above have the shape shown in Figures 3 and 4, the preferable sizes and positions of the protrusions are as shown in the following from the standpoint of the property for removing the trapped air, the adhesion with the adherend and the appearance.

It is preferable that the protrusions 2c-1 and 2c-2 have the same shape of a rectangular parallelepiped, the widths of the portions contacting the adherend are each 50 to 1400 $\mu$m and more preferably 80 to 700 $\mu$m, the heights of the portions contacting the adherend are each 2 to 60 $\mu$m and more preferably 5 to 50 $\mu$m, and the lengths of the portions contacting the adherend are each 50 to 5,000 $\mu$m and more preferably 100 to 3,000 $\mu$m.

It is preferable that the gap between the portions of the adjacent protrusions 2b and 2c-1 contacting the adherend and the gap between the portions of adjacent protrusions 2b and 2c-2 contacting the adherend are each 5 to 300 $\mu$m and more preferably 10 to 200 $\mu$m. It is preferable that the gap between the portions of the protrusions 2c-1 and 2c-2 contacting the adherend is 5 to 300 $\mu$m and more preferably 10 to 200 $\mu$m.

It is preferable that the width of the portion of the protrusion 2c-3 contacting the adherend is 50 to 2,900 $\mu$m and more preferably 100 to 1,900 $\mu$m. It is preferable that the length of the portion of the protrusion 2c-3 contacting the adherend is 50 to 5,000 $\mu$m and more preferably 100 to 3,000 $\mu$m. The gap between the portions of the adjacent protrusions 2b and 2c-3 contacting the adherend is 5 to 500 $\mu$m and more preferably 10 to 300 $\mu$m. It is preferable that gap between the portion of the protrusion 2c-1 or 2c-2 contacting the adherend and the portion of the protrusion 2c-3 contacting the adherend is 5 to 300 $\mu$m and more preferably 10 to 200 $\mu$m.

The pressure sensitive adhesive sheet of the present invention comprising the pressure sensitive adhesive layer having the structure described above exhibits the following effects.

(1) Even when the air is trapped between the pressure sensitive adhesive layer and the adherend, the trapped air can be easily removed.
(2) By disposing the independent discontinuous protrusions in the form of islands between the stripe-shaped protrusions in the form protruded from the stripe-shaped protrusions, temporary positioning and repositioning of the sheet can be facilitated.
(3) Poor appearance due to depression of the substrate sheet can be prevented.
(4) Decrease in the adhesive strength due to decrease in the area of adhesion is suppressed.
(5) Blister resistance is excellent since, even when a gas is generated from the adherend, the generated gas can be easily discharged.

(Pressure sensitive adhesive)

The pressure sensitive adhesive used for forming the pressure sensitive adhesive layer described above is not particularly limited, and a suitable pressure sensitive adhesive can be selected from pressure sensitive adhesives conventionally used for pressure sensitive adhesive layers in pressure sensitive adhesive sheets. For example, acrylic pressure sensitive adhesives, rubber-based pressure sensitive adhesives, silicone-based pressure sensitive adhesives, polyurethane-based pressure sensitive adhesives and polyester-based pressure sensitive adhesives can be used. Any of pressure sensitive adhesives of the emulsion type, the solvent type and the non-solvent type can be used. Any of pressure sensitive adhesives of the crosslinking type and the non-crosslinking type can be used.

[Substrate sheet]

The substrate sheet used for the pressure sensitive adhesive sheet of the present invention is not particularly limited, and various types of plastic sheets and papers which are conventionally used as the substrate sheet for pressure sensitive adhesive sheets having a pressure sensitive adhesive layer, can be used. The material described above may have decorative layers such as printings, vapor depositions and sputterings and functional layers such as hard coat layers, antifouling coating layers and coating layers for adjusting gloss on the surface of the material.

Examples of the plastic sheet include sheets comprising polyolefin-based resins such as polyethylene, polypropylene and various type of olefin-based copolymers, polyester-based resins such as polyethylene terephthalate, polyethylene naphthalate and polybutylene terephthalate, polystyrene-based resins, polyvinyl chloride-based resins, acrylic resins, polycarbonate-based resins, polyamide-based resins, polyurethane-based resins, fluororesins such as polytetrafluoroethylene, polybutene, polybutadiene, polymethylpentene, ethylene-vinyl acetate copolymers, ethylene (meth)acrylic acid copolymers, ethylene (meth)acrylic acid ester copolymers, ABS resins, ionomers, thermoplastic elastomers containing components of polyolefins, polyurethanes, polystyrenes, polyvinyl chloride and polyesters and mixtures of these resins or sheets comprising laminates of these resins.

The above plastic sheet may have a surface treatment such as the treatment in accordance with a oxidation process or a roughening process, where desired, so that tight adhesion with a layer disposed on the plastic sheet such as a pressure sensitive adhesive layer, a printing layer or a layer receiving inks can be improved. Examples of the oxidation process include the treatment by corona discharge, the treatment with plasma, the treatment with chromic acid (a wet process), the treatment with flame and the treatment with ozone and by irradiation with ultraviolet light. Examples of the roughening process include the sand blasting process and the treatment with a solvent. The surface treatment is suitably selected in accordance with the type of the film. In general, the treatment by corona discharge is preferable from the standpoint of the effect and the operability. The primer treatment comprising forming a primer layer may be conducted.

As the paper, woodfree paper, coated paper and crafted paper can be used. When paper is used as the substrate sheet, in general, the unit weight is selected in the range of 40 to 120 $g/m^2$.

When a plastic sheet is used as the substrate sheet, the thickness of the plastic sheet is not particularly limited. In general, the thickness is selected in the range of 20 to 500 $\mu$m and preferably in the range of 30 to 300 $\mu$m.

[Process for producing the pressure sensitive adhesive sheet]

As the process for producing the pressure sensitive adhesive sheet, any process can be used as long as the pressure sensitive adhesive layer having the protrusions having the shape described above can be formed on the surface of the substrate sheet. For example, a flat pressure sensitive adhesive layer may be formed directly on the surface of the substrate sheet and, then, the formed pressure sensitive adhesive layer is brought into contact with an embossing roll to form the protrusions having the prescribed shape. However, the pressure sensitive adhesive sheet of the object product can be produced efficiently in accordance with the process of the present invention described in the following.

The process for producing a pressure sensitive adhesive sheet of the present invention is **characterized in that**, using a release sheet having a layer treated for releasing which has a face of shape transfer on the surface, a pressure sensitive adhesive layer is formed on the layer treated for releasing and a substrate sheet is laminated with the pressure sensitive adhesive layer.

In the process of the present invention, the prescribed shape is formed on the base sheet of a release sheet in accordance with a conventional process such as the process using an embossing roll in the first step, and a face for shape transfer is formed by coating the face of the base sheet having the formed shape with a releasing agent. Then, a pressure sensitive adhesive layer is formed on the layer for releasing formed above on the face for shape transfer in the base sheet of a release sheet in accordance with a conventional process, and a pressure sensitive adhesive layer having the release sheet is prepared. The prepared pressure sensitive adhesive layer having the release sheet is laminated with a substrate sheet, and the pressure sensitive adhesive layer is transferred to the substrate sheet. In this manner, the pressure sensitive adhesive sheet of the present invention having the pressure sensitive adhesive layer on which protrusions having the prescribed shape are disposed, can be produced. For using the prepared pressure sensitive adhesive sheet, the release sheet is removed. The pressure sensitive adhesive layer is brought into contact with an adherend and applied while pressure is applied by a squeegee or fingers. The air is discharged, and no trapped air is formed. Thus, the smooth application can be achieved easily with excellent adhesion and appearance. On the pressure sensitive adhesive sheet after being applied, no depressions or no uneven structures are formed on the surface of the substrate sheet, and deterioration in the appearance does not take place.

(Release sheet)

Examples of the release sheet used for the process of the present invention include release sheets prepared by coating a paper substrate such as woodfree paper, glassine paper and coated paper, a laminate paper obtained by laminating the paper substrate with a thermoplastic resin such as polyethylene or a plastic film, examples of which include films of polyesters such as polyethylene terephthalate, polybutylene terephthalate and polyethylene naphthalate and polyolefins such as polypropylene and polyethylene, with a releasing agent such as a silicone resin to form a releasing layer having a thickness of 0.05 to 5 $\mu$m. The thickness of the release sheet is not particularly limited and is, in general, about 10 to 250 $\mu$m and preferably about 20 to 200 $\mu$m.

EXAMPLES

The present invention will be described more specifically with reference to examples in the following. However, the present invention is not limited to the examples.

The properties of the pressure sensitive adhesive sheets obtained in Example and Comparative Examples were evaluated in accordance with the following methods.

(1) Property for removing the trapped air (Test of disappearance of the trapped air)

A pressure sensitive adhesive sheet was cut to a size of 50 mm×50 mm, and the release sheet was removed. The obtained test piece was attached to a plate coated with a melamine resin in a manner such that a circular portion of the trapped air having a diameter of 15 mm was formed. The pressure sensitive adhesive sheet was pressed by a squeegee, and the condition after the pressing was evaluated in accordance with the following criterion:

good: The portion of the trapped air disappeared.
poor: The portion of the trapped air did not disappear.

(2) Area of adhesion

A pressure sensitive adhesive sheet was cut, and the section was observed with a scanning electron microscope. Dimensions of designated portions were measured, and the area of adhesion (%) was obtained in accordance with the following equation:

$$\frac{[A_w \times (B_1 + B_{w1} + B_1 + B_{w1}) + B2_w \times B_1 + B2_w \times B_1 + B1_w \times B_1]}{(A_w + A_{bw}) \times (B_1 + B_{w1} + B_1 + B_{w1})} \times 100$$

Using the marks in Figures 3 and 4, the marks used in the above equation can be defined as follows:

$A_w$: the width of 2b (the portion contacting the adherend)
$A_{bw}$: the gap between adjacent 2b (the portions contacting the adherend)
$B1_w$: the width of 2c-3 (the portion contacting the adherend)
$B2_w$: the width of 2c-1 and 2c-2 (the portions contacting the adherend)
$B_1$: the length of 2c-1, 2c-2 and 2c-3 (the portions contacting the adherend)
$B_{w1}$: the gap between 2c-1 or 2c-2 (the portion contacting the adherend) and 2c-3 (the portion contacting the adherend)

(3) Appearance

A pressure sensitive adhesive sheet was cut to a size of 50 mm×50 mm, and a release sheet was removed. The obtained test piece was attached to a plate coated with a melamine resin. After the pressure sensitive adhesive sheet was pressed by a squeegee, the appearance was visually observed at a position separated by 30 cm and evaluated in accordance with the following criterion:

excellent: no unevenness adversely affecting the appearance found on the surface of the substrate
good: some unevenness adversely affecting the appearance found on the surface of the substrate, but not significant
fair: unevenness adversely affecting the appearance clearly found on the surface of the substrate
poor: the appearance is poor
very poor: the appearance is very poor

(4) Property for repositioning

A pressure sensitive adhesive sheet was cut to a size of 50 mmx50 mm, and a release sheet was removed. The obtained test piece was attached to a plate coated with a melamine resin. Immediately after being attached, the pressure sensitive adhesive sheet was manually peeled off, and the result was evaluated in accordance with the following criterion:

excellent: peeled off easily
good: peeled off not easily but without forming damages

Example 1

Woodfree paper of 110 g/m² was laminated with polyethylene to a thickness of 30 μm, and depressions having a prescribed shape was formed on the side of the laminate having the polyethylene layer using an embossing roll. The resultant laminate was coated with a silicone resin to a thickness of 0.1 μm, and a release sheet having a face of shape transfer was formed.
Then, a pressure sensitive adhesive layer was formed on the layer treated for releasing of the release sheet prepared above using an acrylic pressure sensitive adhesive [containing 100 parts by mass of "COPONYL N-2147" manufactured by NIPPON SYNTHETIC CHEMICAL INDUSTRY Co., Ltd. and 1 part by mass of "CORONATE L" manufactured by NIPPON POLYURETHANE INDUSTRY Co., Ltd.]. To the formed pressure sensitive adhesive layer, a polypropylene synthetic paper having a thickness of 80 μm [manufactured by YUPO Corporation; the trade name: "YUPO SGS80"] was laminated. In this manner, a pressure sensitive adhesive sheet having a release sheet which had a pressure sensitive adhesive layer having protrusions having the shape shown in Figures 3 and 4 and the dimensions shown in Table 1-1 was prepared. The results of evaluation of the properties of the prepared pressure sensitive adhesive sheet are shown in Table 1.

Examples 2 to 13

After a release sheet having a face for transfer of a prescribed shape was formed in accordance with the same procedures as those conducted in Example 1, a pressure sensitive adhesive layer was formed on the layer treated for releasing of the obtained pressure sensitive adhesive sheet using the same acrylic pressure sensitive adhesive as that used in Example 1. To the formed pressure sensitive adhesive layer, a polypropylene synthetic paper having a thickness of 80 μm ["YUPO SGS80"] (described above) was laminated. In this manner, pressure sensitive adhesive sheets having a release sheet which had a pressure sensitive adhesive layer having protrusions having the shape shown in Figures 3 and 4 and the dimensions shown in Tables 1-1 and 1-2 were prepared. While the protrusions on the pressure sensitive adhesive layer in Figures 3 and 4 had the shape of a rectangular parallelepiped, the protrusions in Examples 9 and 12 had the shape of a frustum of a quadrangular pyramid in which the side edges of the trapezoidal section in the vertical direction had an angle of inclination of 45°. The results of evaluation of the properties of the prepared pressure sensitive adhesive sheets are shown in Table 1.

Comparative Examples 1 to 3

Pressure sensitive adhesive sheets having a release sheet were prepared in accordance with the same procedures as those conducted in Example 1 except that no independent discontinuous protrusions in the form of islands were disposed. The results of evaluation of the properties of the prepared pressure sensitive adhesive sheets are shown in Table 1.

Table 1-1

| Example Comparative Example | 1 | 2 | 3 | 4 | 5 | 6 | 7 | 8 |
|---|---|---|---|---|---|---|---|---|
| Shape of protrusions in pressure sensitive adhesive layer[1) ] | rp | rp | rp | rp | rp | rp | rp | rp |
| Size and position of protrusions (μm) | | | | | | | | |
| $A_w$ | 250 | 550 | 1000 | 600 | 600 | 750 | 150 | 255 |

(continued)

| Size and position of protrusions (μm) | | | | | | | | |
|---|---|---|---|---|---|---|---|---|
| $A_h$ | 15 | 15 | 25 | 15 | 15 | 15 | 10 | 15 |
| $A_{bw}$ | 260 | 560 | 1000 | 600 | 600 | 750 | 220 | 255 |
| $B1_w$ | 160 | 440 | 880 | 480 | 480 | 450 | 180 | 215 |
| $B2_w$ | 100 | 200 | 410 | 210 | 210 | 150 | 90 | 100 |
| $B_h$ | 15 | 15 | 25 | 20 | 20 | 15 | 10 | 30 |
| $B_1$ | 250 | 550 | 1000 | 600 | 600 | 450 | 200 | 100 |
| $B_{w1}$ | 25 | 60 | 100 | 60 | 60 | 150 | 20 | 20 |
| $B_{bw}$ | 20 | 50 | 60 | 60 | 60 | 150 | 10 | 15 |
| $[A-B1]_{bw}$ | 50 | 60 | 60 | 60 | 60 | 150 | 20 | 20 |
| $[A-B2]_{bw}$ | 20 | 55 | 60 | 60 | 60 | 150 | 15 | 20 |
| $C_h$ | 0 | 0 | 0 | 5 | 5 | 0 | 0 | 15 |
| $D_h$ | 25 | 25 | 35 | 25 | 0 | 30 | 30 | 25 |

| Evaluation of properties | | | | | | | | |
|---|---|---|---|---|---|---|---|---|
| property for removing trapped air | good | good | good | good | good | good | good | good |
| area of adhesion (%) | 81 | 84 | 89 | 84 | 84 | 69 | 85 | 84 |
| appearance | excellent | excellent | good | excellent | excellent | good | excellent | excellent |
| repositioning | good | good | good | excellent | excellent | good | good | excellent |

Table 1-2

| Example | 9 | 10 | 11 | 12 | 13 | | | |
|---|---|---|---|---|---|---|---|---|
| Comparative Example | | | | | | 1 | 2 | 3 |
| Shape of protrusions in pressure sensitive adhesive layer[1] | ts | rp | rp | ts | rp | rp | rp | rp |

| Size and position of protrusions (μm) | | | | | | | | |
|---|---|---|---|---|---|---|---|---|
| $A_w$ | 600 | 600 | 250 | 1600 | 500 | 550 | 1000 | 500 |
| $A_h$ | 15 | 15 | 15 | 20 | 15 | 15 | 25 | 15 |
| $A_{bw}$ | 600 | 600 | 260 | 1600 | 800 | 560 | 1000 | 800 |
| $B1_w$ | 480 | 480 | 160 | 1400 | 680 | - | - | - |
| $B2_w$ | 210 | 210 | 100 | 650 | 310 | - | - | - |
| $B_h$ | 20 | 50 | 15 | 20 | 15 | - | - | - |
| $B_1$ | 600 | 600 | 250 | 700 | 500 | - | - | - |
| $B_{w1}$ | 60 | 60 | 25 | 50 | 60 | - | - | - |
| $B_{bw}$ | 60 | 60 | 20 | 100 | 60 | - | - | - |
| $[A-B1]_{bw}$ | 60 | 60 | 50 | 100 | 60 | - | - | - |
| $[A-B2]_{bw}$ | 60 | 60 | 20 | 100 | 60 | - | - | - |
| $C_h$ | 5 | 35 | 0 | 0 | 0 | - | - | - |
| $D_h$ | 25 | 25 | 5 | 40 | 30 | 25 | 35 | 30 |

| Evaluation of properties | | | | | | | | |
|---|---|---|---|---|---|---|---|---|
| property for removing trapped air | good | good | good | good | good | good | good | good |
| area of adhesion (%) | 84 | 84 | 81 | 89 | 83 | 50 | 50 | 38 |
| appearance | excellent | good | excellent | good | excellent | fair | very poor | poor |

(continued)

| Evaluation of properties | | | | | | | | |
|---|---|---|---|---|---|---|---|---|
| repositioning | exce lent | excel lent | good | good | good | good | good | good |

Notes:

1) rp: a rectangular parallelepiped ts: a frustum of a quadrangular pyramid The sizes and positions of the protrusions are shown with reference to the marks in Figures 3 and 4.

$A_w$: the width of 2b (the portion contacting the adherend)

$A_h$: the height of 2b

$A_{bw}$: the gap between adjacent 2b (the portions contacting the adherend)

$B1_w$: the width of 2c-3 (the portion contacting the adherend)

$B2_w$: the width of 2c-1 and 2c-2 (the portions contacting the adherend)

$B_h$: the height of 2c-1, 2c-2 and 2c-3

$B_1$: the length of 2c-1,2c-2 and 2c-3 (the portions contacting the adherend)

$B_{w1}$: the gap between 2c-1 or 2c-2 (the portion contacting the adherend) and 2c-3 (the portion contacting the adherend)

$B_{bw}$: the gap between 2c-1 and 2c-2 (the portions contacting the adherend)

$[A-B1]_{bw}$: the gap between adjacent 2b and 2c-3 (the portions contacting the adherend)

$[A-B2]_{bw}$: the gap between adjacent 2b and 2c-1 (the portions contacting the adherend) and the gap between adjacent 2b and 2c-2 (the portions contacting the adherend)

$C_h$: (the height of 2c-1, 2c-2) - (the height of 2b)

$D_h$: the height of 2a

As shown in Tables 1-1 and 1-2, the pressure sensitive adhesive sheets of the present invention in which, on the surface of the substrate sheet directly or on a pressure sensitive adhesive base layer having a prescribed thickness which was formed on the surface of the substrate sheet, a plurality of stripe-shaped protrusions were disposed in parallel at a prescribed distance continuously from one end portion to the other end portion of the substrate sheet, and a plurality of independent discontinuous protrusions were disposed in the form of islands between adjacent stripe-shaped protrusions, were clearly more excellent than the pressure sensitive adhesive sheets of Comparative Examples 1 to 3 in which no independent discontinuous protrusions in the form of islands were disposed.

INDUSTRIAL APPLICABILITY

The pressure sensitive adhesive sheet of the present invention enables to easily remove the trapped air formed during application of the sheet and exhibits excellent appearance, adhesive strength and blister resistance.

**Claims**

1. A pressure sensitive adhesive sheet which comprises a substrate sheet and a pressure sensitive adhesive layer disposed at least on one face of the substrate sheet, wherein the pressure sensitive adhesive layer has a structure such that:

    (a) on a surface of the substrate sheet directly or on a pressure sensitive adhesive base layer having a prescribed thickness which is formed on a surface of the substrate sheet, a plurality of stripe-shaped protrusions are disposed in parallel at a prescribed distance continuously from one end portion to an other end portion of the substrate sheet, and
    (b) a plurality of independent discontinuous protrusions are disposed in a form of islands between adjacent stripe-shaped protrusions.

2. The pressure sensitive adhesive sheet according to claim 1, wherein the plurality of independent discontinuous protrusions in a form of islands are disposed between adjacent stripe-shaped protrusions regularly in a manner such that a repeating pattern is formed with groups of a prescribed number of the protrusions.

3. The pressure sensitive adhesive sheet according to any one of claims 1 and 2, wherein a thickness of the pressure sensitive adhesive base layer is 1 to 60 $\mu$m.

4. The pressure sensitive adhesive sheet according to any one of claims 1 to 3, wherein portions of the plurality of stripe-shaped protrusions contacting an adherend have a width of 100 to 3,000 $\mu$m and a height of 2 to 40 $\mu$m.

5. The pressure sensitive adhesive sheet according to any one of claims 1 to 4, wherein a distance between portions of adjacent stripe-shaped protrusions contacting an adherend is 115 to 3,000 $\mu$m.

6. The pressure sensitive adhesive sheet according to any one of claims 1 to 5, wherein a height of the plurality of independent discontinuous protrusions disposed in a form of islands between adjacent stripe-shaped protrusions is 2 to 60 $\mu$m, and a difference of the height from a height of the stripe-shaped protrusion is 0 to 35 $\mu$m.

7. The pressure sensitive adhesive sheet according to any one of claims 2 to 6, wherein the plurality of independent discontinuous protrusions disposed in a form of islands are disposed regularly in a manner such that a repeating pattern is formed with groups of three protrusions.

8. The pressure sensitive adhesive sheet according to claim 7, wherein the plurality of independent discontinuous protrusions disposed in a form of islands are disposed in a manner such that: two protrusions having a same shape of a rectangular parallelepiped or a frustum of a quadrangular pyramid are disposed in parallel with the stripe-shaped protrusions and at parallel positions at a prescribed distance from each other; a single protrusion having a shape of a rectangular parallelepiped or a frustum of a quadrangular pyramid is disposed at a position such that a central line of the single protrusion is placed at a position of a central line of a gap between the two protrusions having a same shape of a rectangular parallelepiped or a frustum of a quadrangular pyramid, and the single protrusion is placed at prescribed distances from the two protrusions having a shape of a rectangular parallelepiped or a frustum of a quadrangular pyramid; and groups of three protrusions comprising said two protrusions and said single protrusion are disposed regularly in a manner such that a repeating pattern is formed with the groups of three protrusions.

9. A process for producing a pressure sensitive adhesive sheet described in any one of claims 1 to 8, which comprises, using a release sheet having a layer treated for releasing which has a face of shape transfer on a surface, forming a pressure sensitive adhesive layer on the layer treated for releasing and laminating a substrate sheet with the pressure sensitive adhesive layer.

# Fig. 1

# Fig. 2

# Fig. 3

# Fig. 4

**INTERNATIONAL SEARCH REPORT**

| | International application No. |
|---|---|
| | PCT/JP2008/068917 |

A. CLASSIFICATION OF SUBJECT MATTER
*C09J7/02*(2006.01)i, *C09J201/00*(2006.01)i

According to International Patent Classification (IPC) or to both national classification and IPC

B. FIELDS SEARCHED

Minimum documentation searched (classification system followed by classification symbols)
C09J1/00-C09J201/10

Documentation searched other than minimum documentation to the extent that such documents are included in the fields searched
See extra sheet.

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 53-16057 U  (Yasuo FUJITA),<br>10 February, 1978 (10.02.78),<br>Full text; all drawings<br>(Family: none) | 1-8<br>1-9 |
| Y | JP 2002-91317 A  (Jei Ti Purosupurinto Kabushiki Kaisha),<br>27 March, 2002 (27.03.02),<br>Full text; all drawings<br>(Family: none) | 1-9 |
| Y | JP 6-248243 A  (Sekisui Chemical Co., Ltd.),<br>06 September, 1994 (06.09.94),<br>Full text; all drawings<br>(Family: none) | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>01 December, 2008 (01.12.08) | Date of mailing of the international search report<br>09 December, 2008 (09.12.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/068917

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 6-184502 A  (Sekisui Chemical Co., Ltd.),<br>05 July, 1994 (05.07.94),<br>Full text; all drawings<br>(Family: none) | 1-9 |
| Y | JP 63-223081 A  (Bridgestone Corp.),<br>16 September, 1988 (16.09.88),<br>Full text; all drawings<br>& EP 279579 A1 | 1-9 |
| Y | JP 54-64162 U  (Sekisui Chemical Co., Ltd.),<br>07 May, 1979 (07.05.79),<br>Full text; all drawings<br>(Family: none) | 1-9 |
| Y | JP 50-108961 U  (Nitto Electric Industrial Co., Ltd.),<br>05 September, 1975 (05.09.75),<br>Full text; all drawings<br>(Family: none) | 1-9 |
| Y | JP 3-115639 U  (Michiko TAKAO),<br>29 November, 1991 (29.11.91),<br>Full text; all drawings<br>(Family: none) | 1-9 |
| A | JP 1245360 S  (Kinesio Co., Ltd.),<br>19 July, 2005 (19.07.05),<br>Full text; all drawings<br>(Family: none) | 1-9 |
| P,A | JP 1337287 S  (Nitto Denko Corp.),<br>04 August, 2008 (04.08.08),<br>Full text; all drawings<br>(Family: none) | 1-9 |

Form PCT/ISA/210 (continuation of second sheet) (April 2007)

**INTERNATIONAL SEARCH REPORT**

International application No.

PCT/JP2008/068917

Continuation of B. FIELDS SEARCHED
  Documentation searched other than minimum documentation to
  the extent that such documents are included in the fields searched

Jitsuyo Shinan Koho          1922-1996
Kokai Jitsuyo Shinan Koho    1971-2008
Jitsuyo Shinan Toroku Koho   1996-2008
Toroku Jitsuyo Shinan Koho   1994-2008
Isho Koho                    1888-2008

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEISEI101998138691 B

- JP 2004115766 A